# EUROPÄISCHE PATENTSCHRIFT

(11) **EP 0 691 909 B1**
(45) Veröffentlichungstag und Bekanntmachung des Hinweises auf die Patenterteilung: **18.06.1997**
(21) Anmeldenummer: 94909119.3
(22) Anmeldetag: 07.03.1994
(51) Int. Cl.: B60M 1/30, E04H 6/36

(54) **PARKANLAGE FÜR KRAFTFAHRZEUGE**
PARKING FACILITY FOR MOTOR VEHICLES
INSTALLATION DE STATIONNEMENT POUR VEHICULES AUTOMOBILES

(30) Priorität: 01.04.1993 DE 4310666
(43) Veröffentlichungstag der Anmeldung: 17.01.1996
(73) Patentinhaber: OTTO WÖHR GMBH, 70825 Korntal-Münchingen (DE)
(72) Erfinder: CARAMEL, Rudolf, D-65719 Hofheim (DE)
(74) Vertreter: Hoeger, Stellrecht & Partner
(86) Internationale Anmeldenummer: EP9400680
(87) Internationale Veröffentlichungsnummer: WO9422690

(56) Entgegenhaltungen:
- EP-A- 0 413 659
- EP-A- 0 522 955

## Beschreibung

Die Erfindung betrifft eine Parkanlage für Kraftfahrzeuge mit auf einer Fahrbahn verfahrbaren, mit einem Elektromotor für den Antrieb versehenen Parkpaletten und mit längs der Fahrbahn verlaufenden, ein Band aus einem Metall mit hoher elektrischer Leitfähigkeit umfassenden Stromschienen zur Versorgung der Elektromotoren, an denen an den Parkpaletten angeordnete Stromabnehmer anliegen.

Elektromotorisch angetriebene Parkpaletten werden über stationär neben den Fahrbahnen der Parkpaletten angeordnete Stromschienen versorgt, und zwar sowohl mit dem für den Betrieb der Motoren notwendigen Antriebsstrom als auch mit Steuersignalen zur Steuerung der Elektromotoren. Es ist dabei einerseits notwendig, daß der elektrische Kontakt zwischen den auf den Stromschienen gleitenden Stromabnehmern und den Stromschienen selbst in jedem Augenblick einwandfrei funktioniert, zum anderen muß dafür Sorge getragen werden, daß die Leitfähigkeit der Stromschienen möglichst gut ist, um Verluste insbesondere bei der Verwendung langer Fahrbahnen zu minimieren. In der Praxis ergeben sich dabei Schwierigkeiten dadurch, daß Stromschienen aus gut leitfähigen Metallen den harten Betriebsbedingungen nicht gewachsen sind. Zum einen stellt sich häufig ein starker mechanischer Abrieb ein, zum anderen werden die Stromschienen durch chemische Einflüsse zerstört, beispielsweise durch salzhaltiges Wasser und dergleichen. Es ist auch beobachtet worden, daß die Stromschiene durch die Umwelteinflüsse zumindest partiell mit einer Schicht überzogen werden, die einen einwandfreien elektrisch leitenden Kontakt zwischen Stromabnehmer und Stromschiene behindern.

In der EP 0 522 955 A1 ist eine Stromschiene beschrieben, bei der auf ein übliches Doppel-T-Schienenprofil eine dünne Schicht aufgelegt ist. Diese Schicht besteht aus einem besonders widerstandsfähigen Metall, das jedoch eine schlechte elektrische Leitfähigkeit aufweisen kann. Dagegen besteht das Doppel-T-Schienenprofil aus einem Metall guter Leitfähigkeit, beispielsweise aus Aluminium oder Kupfer.

Eine solche Konstruktion, bei der zwei verschiedene Metalle miteinander kombiniert sind, ist nur möglich, bei einer sehr stabilen Konstruktion, beispielsweise einem Doppel-T-Schienenprofil, da dann trotz unterschiedlicher thermischer Ausdehnungskoeffizienten der Metalle durch die sehr stabile Konstruktion ein ausreichender Widerstand gegen Verformung auch bei großen Temperaturänderungen gewährleistet ist.

Dagegen ergeben sich bei der Verwendung bandförmiger Stromschienen Probleme, wenn man in der bekannten Weise unterschiedliche Metalle kombinieren will.

Es ist daher Aufgabe der Erfindung, eine gattungsgemäße Parkanlage für Kraftfahrzeuge so auszubilden, daß einerseits auch bei härtesten praktischen Anforderungen über lange Zeit ein einwandfreier elektrischer Kontakt zwischen Stromabnehmer und Stromschiene erhalten bleibt und dabei trotzdem die elektrischen Verluste minimiert werden, und daß andererseits unterschiedliche Wärmeausdehnungskoeffizienten der verschiedenen Materialien so aufgefangen werden, daß das Band sich bei Temperaturänderungen nicht verformt.

Diese Aufgabe wird bei einer Parkanlage der eingangs beschriebenen Art erfindungsgemäß dadurch gelöst, daß das Band einen Kern aus einem Metall mit elektrisch guter Leitfähigkeit aufweist und daß der Kern auf der Ober- und der Unterseite eine Schicht eines widerstandsfähigen Metalls trägt.

Es wird also eine Sandwich-Struktur der Stromschiene verwendet, bei der durch die Verwendung eines Metalls hoher elektrischer Leitfähigkeit eine möglichst verlustfreie Leitung ermöglicht wird, während andererseits die Kontaktfläche zu den Stromabnehmern durch die Schicht eines widerstandsfähigen Metalls optimal gegen Umwelteinflüsse geschützt ist. Dieses widerstandsfähige Metall kann eine geringere elektrische Leitfähigkeit haben, da der Stromtransport im wesentlichen über das Metall mit der elektrisch hohen Leitfähigkeit erfolgt, während die Schicht nur quer zu ihrer Längsausdehnung vom Strom durchflossen wird, also auf einem sehr kurzen Weg. Die Schicht kann so ausgewählt sein, daß sie eine wesentlich höhere mechanische Härte aufweist als das leitfähige Metall des Bandes, dadurch wird der Verschleiß im Betrieb durch mechanischen Abrieb deutlich reduziert. Zum anderen kann ein Metall verwendet werden, welches auch gegen chemische Substanzen der Umgebung resistent ist, so daß keine Korrosion an der Grenzschicht zu den Stromabnehmern auftritt. Eine Laminatstruktur, die an der Ober- und an der Unterseite mit einem widerstandsfähigen Material beschichtet ist, ist eine symmetrische Struktur, die bei unterschiedlicher Wärmeausdehnung der Zwischenschicht und der Ober- und Unterschicht auftretende Spannungen aufnimmt, ohne daß eine Verformung zu verzeichnen ist.

Dabei ist es besonders vorteilhaft, wenn die Schicht der Ober- und der Unterseite aus dem gleichen Metall besteht.

Besonders günstig ist es, wenn das Metall mit hoher elektrischer Leitfähigkeit Kupfer oder eine überwiegend Kupfer enthaltende Legierung ist.

Die Schicht kann in der unterschiedlichsten Weise auf das Metall mit hoher elektrischer Leitfähigkeit aufgebracht sein, beispielsweise ist eine galvanische Aufbringung möglich. Dann ist es vorteilhaft, wenn diese Schicht zumindest überwiegend aus Chrom, CrNi oder Zink besteht.

Die Schicht kann auch durch Plasmaspritzen, Laseroberflächenbeschichten oder insbesondere durch Auflaminieren aufgebracht werden. Das Auflaminieren kann durch Walzen, Explosivplattierung etc. vorgenommen werden, also durch an sich bekannte Techniken.

Die nachfolgende Beschreibung einer bevorzugten Ausführungsform der Erfindung dient im Zusammenhang mit der Zeichnung der näheren Erläuterung. Es zeigen:
- Figur 1:: eine schematische Ansicht einer auf einer Fahrbahn verfahrbaren, elektrisch angetriebenen Parkpalette;
- Figur 2:: eine Schnittansicht durch eine Stromschiene, die auf der Ober- und auf der Unterseite beschichtet ist und
- Figur 3:: eine Schnittansicht durch eine Stromschienenanordnung, in der eine Stromschiene gemäß Figur 2 verlegt ist.

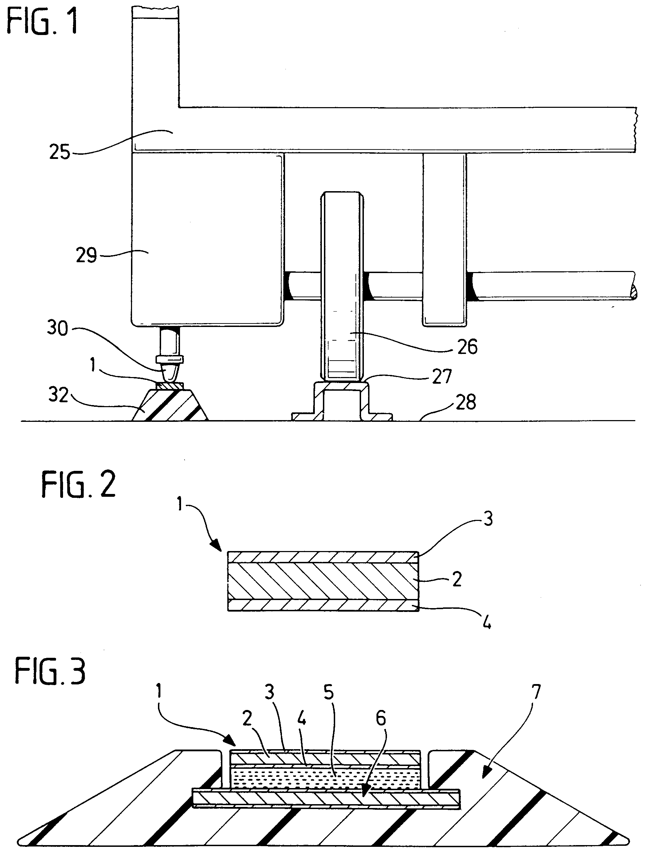

In Figur 1 ist schematisch eine Parkpalette 25 dargestellt, die über Räder 26 auf einer Fahrbahn 27 verfahrbar ist. Die Fahrbahn ist in diesem Falle durch eine Schiene gebildet, die auf dem Boden 28 eines Gebäudes verlegt ist, beispielsweise einer Garage.

An der Parkpalette 25 ist ein Elektromotor 29 angeordnet, der die Räder 26 antreibt. Der Elektromotor 29 trägt einen Stromabnehmer 30, der an einer parallel zur Fahrbahn 27 verlegten Stromschiene 1 angreift und dadurch den Elektromotor 29 einerseits mit Antriebsstrom und zum anderen gegebenenfalls mit Steuersignalen versorgt. Die Stromschiene 1 ist dabei neben der Fahrbahn 27 auf dem Boden 28 festgelegt, im dargestellten Ausführungsbeispiel über einen Träger 32 aus einem elektrisch isolierten Material.

Die Stromschiene 1 ist bandförmig ausgebildet und kann eine große Länge aufweisen, beispielsweise kann eine solche Stromschiene 60 m lang sein. Sie besteht aus einem Kern 2, der an der Oberseite und an der Unterseite jeweils mit einer Schicht 3 beziehungsweise 4 bedeckt ist.

Insgesamt ergibt sich somit eine bandförmige Sandwich-Struktur, bei der die Dicke des Kerns 2 beispielweise zweimal so groß ist wie die Dicke der Schichten 3 und 4. Bei einem bevorzugten Ausführungsbeispiel ist die Gesamtdicke der Stromschiene 1 beispielsweise 1 mm, so daß man ein flexibles Band erhält, das auf Rollen aufgerollt werden kann.

Der Kern 2 besteht aus einem Metall mit elektrisch guter Leitfähigkeit, beispielsweise aus Kupfer oder aus einer überwiegend Kupfer enthaltenden Legierung, während die Schichten 3 und 4 aus einem Metall bestehen, das möglichst abriebfest und korrosionsfest ist, beispielsweise aus Chrom, CrNi oder aus Zink. Bei diesem Metall sind die hohe Abriebfestigkeit und die Korrosionsbeständigkeit entscheidend, nicht dagegen die elektrische Leitfähigkeit. Es kann hier also ein Metall verwendet werden, dessen elektrische Leitfähigkeit gegenüber der des Kerns 2 vergleichsweise gering ist.

Anhand der Darstellung der Figur 3 wird eine Möglichkeit beschrieben, wie die Stromschiene 1 praktisch längs der Fahrbahn der Parkpalette verlegt werden kann. Dazu wird bei dem dort beschriebenen Ausführungsbeispiel die Stromschiene 1 mittels einer Klebeschicht 5, beispielsweise mittels eines beidseitig beschichteten Klebebands, auf ein Trägerband 6 aufgeklebt, welches ähnlich wie die Stromschiene 1 als dreischichtiger Laminatkörper mit Sandwich-Struktur ausgebildet ist. Dieses Trägerband 6 ist in einen Profilstab 7 aus einem Kunststoffmaterial eingelegt, der Profilstab 7 läßt den größten Teil der Oberseite des Trägerbands 6 frei, so daß in diesen freien Bereich die Stromschiene 1 mit der Klebeschicht 5 eingelegt werden kann. Die Oberseite der Stromschiene 1 und die Oberseite des Profilstabs 7 sind fluchtend zueinander ausgebildet, so daß eine durchgehende Oberseite der gesamten Baueinheit entsteht.

Der Profilstab 7 wird in beliebiger Weise längs der Fahrbahn der Palette auf dem Boden befestigt, beispielsweise durch Verschrauben.

## Patentansprüche

1. Parkanlage für Kraftfahrzeuge mit auf einer Fahrbahn (27) verfahrbaren, mit einem Elektromotor (29) für den Antrieb versehenen Parkpaletten (25) und mit längs der Fahrbahn (27) verlaufenden, ein Band aus einem Metall mit hoher elektrischer Leitfähigkeit umfassenden Stromschienen (1) zur Versorgung der Elektromotoren (29), an denen an den Parkpaletten (25) angeordnete Stromabnehmer (30) anliegen, dadurch gekennzeichnet, daß das Band einen Kern (2) aus einem Metall mit elektrisch guter Leitfähigkeit aufweist und daß der Kern (2) auf der Ober- und der Unterseite eine Schicht (3 beziehungsweise 4) eines widerstandsfähigen Metalls trägt.

2. Parkanlage nach Anspruch 1, dadurch gekennzeichnet, daß die Schicht (3, 4) der Ober- und der Unterseite aus dem gleichen Metall besteht.

3. Parkanlage nach einem der voranstehenden Ansprüche, dadurch gekennzeichnet, daß das Metall mit hoher elektrischer Leitfähigkeit Kupfer ist.

4. Parkanlage nach einem der Ansprüche 1 oder 2, dadurch gekennzeichnet, daß das Metall mit hoher elektrischer Leitfähigkeit eine überwiegend Kupfer enthaltende Legierung ist.

5. Parkanlage nach einem der voranstehenden Ansprüche, dadurch gekennzeichnet, daß die Schicht (3, 4) galvanisch aufgebracht ist.

6. Parkanlage nach einem der Ansprüche 1 bis 5, dadurch gekennzeichnet, daß die Schicht (3, 4) zumindest überwiegend aus Chrom oder CrNi besteht.

7. Parkanlage nach einem der Ansprüche 1 bis 5, dadurch gekennzeichnet, daß die Schicht (3, 4) zumindest überwiegend aus Zink besteht.

8. Parkanlage nach einem der Ansprüche 1 bis 4, dadurch gekennzeichnet, daß die Schicht (3, 4) durch Plasmaspritzen aufgetragen ist.

9. Parkanlage nach einem der Ansprüche 1 bis 4, dadurch gekennzeichnet, daß die Schicht (3, 4) durch Laseroberflächenbeschichten aufgetragen ist.

10. Parkanlage nach einem der Ansprüche 1 bis 4, dadurch gekennzeichnet, daß die Schicht (3, 4) durch Auflaminieren aufgetragen ist.

## Claims

1. A parking system for motor vehicles, comprising parking pallets (25) movable on a track (27) and provided with an electric motor (29) for the drive, and contact rails (1) extending along the track (27), consisting of a strip of metal with high electrical conductivity and provided for supplying the electric motors (29), against which rest current collectors (30) arranged on the parking pallets (25), characterised in that the strip has a core (2) of a metal with good electrical conductivity and in that the upper and the lower surface of the core (2) is provided with a layer (3, 4 respectively) of a resistant metal.

2. A parking system according to claim 1, characterised in that the layer (3, 4) on the upper and the lower surface is of the same metal.

3. A parking system according to either one of the preceding claims, characterised in that the metal with high electrical conductivity is copper.

4. A parking system according to either one of claims 1 and 2, characterised in that the metal with high electrical conductivity is an alloy predominantly containing copper.

5. A parking system according to any one of the preceding claims, characterised in that the layer (3, 4) is electrodeposited.

6. A parking system according to any one of claims 1 to 5, characterised in that the layer (3, 4) is at least predominantly of chromium or CrNi.

7. A parking system according to any one of claims 1 to 5, characterised in that the layer (3, 4) is at least predominantly of zinc.

8. A parking system according to any one of claims 1 to 4, characterised in that the layer (3, 4) is applied by plasma spraying.

9. A parking system according to any one of claims 1 to 4, characterised in that the layer (3, 4) is applied by laser surface coating.

10. A parking system according to any one of claims 1 to 4, characterised in that the layer (3, 4) is applied by lamination.

## Revendications

1. Installation de garage pour véhicules automobiles comprenant des palettes de garage (25) pouvant circuler sur une voie de circulation (27) et munies d'un moteur électrique (29) pour la propulsion, et des rails conducteurs (1) s'étendant le long de la voie de circulation (27) et comprenant une bande faite d'un métal ayant une haute conductibilité électrique, pour l'alimentation des moteurs électriques (29) et contre lesquels s'appliquent des frotteurs de prise de courant (30) portés par les palettes de garage (25), caractérisée en ce que la bande comprend un noyau (2) fait d'un métal de haute conductibilité électrique et en ce que le noyau (2) porte sur ses faces supérieure et inférieure des couches (3 et 4 respectivement) faites d'un métal résistant.

2. Installation de garage selon la revendication 1, caractérisée en ce que les couches (3, 4) des faces supérieure et inférieure sont faites du même métal.

3. Installation de garage selon une des revendications précédentes, caractérisée en ce que le métal de haute conductibilité électrique est le cuivre.

4. Installation de garage selon la revendication 1 et 2, caractérisée en ce que le métal de haute conductibilité électrique est un alliage contenant du cuivre dans une proportion prédominante.

5. Installation de garage selon une des revendications précédentes, caractérisée en ce que la couche (3, 4) est déposée par dépôt électrolytique.

6. Installation de garage selon une des revendications 1 à 5, caractérisée en ce que la couche (3, 4) est composée de chrome ou de CrNi, au moins dans une proportion prédominante.

7. Installation de garage selon une des revendications 1 à 5, caractérisée en ce que la couche (3, 4) est composée de zinc au moins dans une mesure prédominante.

8. Installation de garage selon une des revendications 1 à 4, caractérisée en ce que la couche (3, 4) est déposée par projection au plasma.

9. Installation de garage selon une des revendications 1 à 4, caractérisée en ce que la couche (3, 4) est déposée par revêtement superficiel au laser.

10. Installation de garage selon une des revendications 1 à 4, caractérisée en ce que la couche (3, 4) est déposée par placage.
